# EUROPEAN PATENT APPLICATION

(11) **EP 3 029 557 A1**
(43) Date of publication of application: **08.06.2016**
(21) Application number: 14851381.5
(22) Date of filing: 14.07.2014
(51) Int. Cl.: G06F 3/042, G02B 6/12, G02B 6/122

(54) **INPUT APPARATUS**

(30) Priority: 04.10.2013 JP 2013209275; 15.05.2014 JP 2014101371
(71) Applicant: Nitto Denko Corporation, Ibaraki-shi, Osaka 567-8680 (JP)
(72) Inventor: SHIMIZU, Yusuke, Ibaraki-shi Osaka 567-8680 (JP); YOSHIOKA, Ryoma, Ibaraki-shi Osaka 567-8680 (JP)
(74) Representative: Hoffmann Eitle
(86) International application number: PCT/JP2014/068667
(87) International publication number: WO 2015/049908

(57) **Abstract**

There is provided an input device including an optical waveguide that prevents cores from being cracked due to pressing with and movement of a tip input part of an input element. This input device includes an optical waveguide W in a rectangular sheet form configured such that linear cores 2 arranged in a lattice form are held between an under cladding layer 1 and an over cladding layer 3 both in a rectangular sheet form. A surface region of the over cladding layer 3 corresponding to part of the cores 2 arranged in the lattice form serves as an input region. Gaps B between adjacent ones of the linear cores 2 arranged in the lattice form are in the range of 10 to 300 µm which is smaller than conventional gaps. The cores 2 have an elasticity modulus equal to or higher than those of the under cladding layer 1 and the over cladding layer 3. This prevents the cores 2 from being cracked due to pressing with and movement of the tip input part of the input element in the input region.

## Description

### TECHNICAL FIELD

The present invention relates to an input device including an optical position detection means.

### BACKGROUND ART

A position sensor for optically sensing a pressed position has been hitherto proposed (see PTL 1, for example). This position sensor includes an optical waveguide in a sheet form including a plurality of linear cores serving as optical paths and arranged in vertical and horizontal directions, and a cladding covering peripheral edge portions of the cores. The position sensor is configured such that light from a light-emitting element is incident on one end surface of the cores and such that the light propagating in the cores is received by a light-receiving element at the other end surface of the cores. When part of the surface of the position sensor in the sheet form is pressed with a finger and the like, some of the cores corresponding to the pressed part are crushed (decreased in cross-sectional area thereof as seen in the pressed direction). The level of light received by the light-receiving element is decreased in the cores corresponding to the pressed part, so that the pressed position is sensed.

### RELATED ART DOCUMENT

### PATENT DOCUMENT

PTL 1: JP-A-HEI8(1996)-234895

### SUMMARY OF INVENTION

Unfortunately, when a character or the like is inputted onto the surface of the position sensor in the sheet form disclosed in PTL 1 described above with an input element such as a pen, there are cases in which the optical waveguide is damaged by a tip input part (such as a pen tip) of the input element according to circumstances. Specifically, in the optical waveguide, there are cases in which part of the over cladding layer positioned above the cores is thin (for example, not greater than 200 µm) for the purpose of making the cores prone to deformation, when pressed, to facilitate the sensing of a pressed position. In such cases, when the force of pressing with the tip input part of the input element is greater than a set value (value set in consideration for an average human pressing force of approximately 1.5 N), there are cases in which the tip input part sinks deeply in a rectangular part of the cladding surrounded by the linear cores. This might cause a crack to appear in part of the cladding and to propagate to the surrounding cores. Also, when the tip input part is moved while a great pressing force is maintained, there are cases in which the tip input part is caught on the linear cores. This might cause a crack to appear in the linear cores. The occurrence of such cracking in the cores hinders light from properly propagating in the cores. As a result, the position sensor loses its function.

In view of the foregoing, it is therefore an object of the present invention to provide an input device including an optical waveguide that prevents cores from being cracked due to pressing with and movement of a tip input part of an input element.

To accomplish the aforementioned object, an input device according to the present invention comprises: an optical waveguide in a sheet form including an under cladding layer in a sheet form, an over cladding layer in a sheet form, and a plurality of linear cores arranged in a lattice form, the cores being held between the under cladding layer and the over cladding layer; a light-emitting element connected to one end surface of the cores of the optical waveguide; and a light-receiving element connected to the other end surface of the cores, wherein light emitted from the light-emitting element passes through the cores of the optical waveguide and is received by the light-receiving element, wherein a surface region of the over cladding layer corresponding to region of the linear cores arranged in the lattice form of the optical waveguide serves as an input region, wherein a position pressed with a tip input part of an input element in the input region is specified, based on the amount of light propagating in the cores which is changed by the pressing with the tip input part, wherein the cores have an elasticity modulus equal to or higher than those of the under cladding layer and the over cladding layer, and wherein gaps between adjacent ones of the linear cores arranged in the lattice form are in the range of 10 to 300 µm to prevent the cores from being cracked due to the pressing with the tip input part.

The present inventors have made studies on the structure of the optical waveguide to prevent the cores of the optical waveguide from being cracked due to pressing with and movement of the tip input part of the input element during the input of a character and the like to the input device with the input element such as a pen if part of the over cladding layer positioned above the cores has a thickness of not greater than 200 µm, for example as thin as 10 to 100 µm. As a result, the present inventors have found out that the inventive optical waveguide configured with the elasticity modulus of the cores equal to or higher than those of the under cladding layer and the over cladding layer, and also configured with the gaps between adjacent ones of the linear cores arranged in the lattice form in the range of 10 to 300 µm, which is smaller than conventional gaps (conventional gaps of at least 450 µm or more), prevent the tip input part from sinking deeply in the gaps, even if the pressing force with the input element such as a pen is increased during the input of a character and the like, and when the tip input part (such as a pen tip) is very thin. Further, the present inventors have found that, when continuously moved with big pressing force, the tip input part is not caught on the cores because the tip input part does not deeply sink in the gaps, and thus no cracking occurs in the cores. Hence, the present inventors have attained the present invention.

In the input device according to the present invention, the elasticity modulus of the cores is equal to or higher than those of the under cladding layer and the over cladding layer, and the gaps between adjacent ones of the linear cores arranged in the lattice form are small, i.e., in the range of 10 to 300 µm. Thus, part of the optical waveguide surrounded by the linear cores is not deformed in such a manner as to sink deeply if subjected to a strong pressing force from the tip input part of the input element. When moved with the strong pressing force, the tip input part is not caught on the cores, and thus no cracking occurs in the cores.

In particular, in addition to the aforementioned deformation suppression function enabled by the settings of the elasticity moduli of the cores, the over cladding layer and the under cladding layer, and the setting of gaps between adjacent linear cores, the optical waveguide having a structure such that the cores are buried in a surface part of the under cladding layer so that the top surface of the cores is flush with the surface of the under cladding layer, and such that the over cladding layer is formed so as to cover the surface of the under cladding layer and the top surface of the cores, allows for easily detecting the position pressed with the tip input part of the input element, and for ensuring good writing feeling for a user of this inventive input device.

### BRIEF DESCRIPTION OF DRAWINGS

[FIG. 1] FIG. 1A is a schematic plan view of an input device according to one embodiment of the present invention, and FIG. 1B is a schematic enlarged sectional view of principal parts thereof.
[FIG. 2] FIG. 2A is a schematic plan view of conventional linear cores arranged in a lattice form, and FIG. 2B is a schematic plan view of linear cores arranged in a lattice form of the aforementioned embodiment.
[FIG. 3] FIG. 3 is a schematic enlarged partial sectional view of the input device when in use.
[FIG. 4] FIGS. 4A to 4D are schematic illustrations of a method of manufacturing an optical waveguide constituting the input device.
[FIG. 5] FIG. 5 is a schematic enlarged sectional view of principal parts of an optical waveguide constituting the input device according to another embodiment of the present invention.
[FIG. 6] FIG. 6 is a schematic enlarged sectional view of principal parts of the input device according to a modification.
[FIG. 7] FIGS. 7A to 7F are schematic enlarged plan views of configurations of intersection of linear cores arranged in a lattice form in the input device.
[FIG. 8] FIGS. 8A and 8B are schematic enlarged plan views of paths of light at intersections of linear cores arranged in the lattice form.

### DESCRIPTION OF EMBODIMENTS

Next, embodiments according to the present invention will now be described in detail with reference to the drawings.

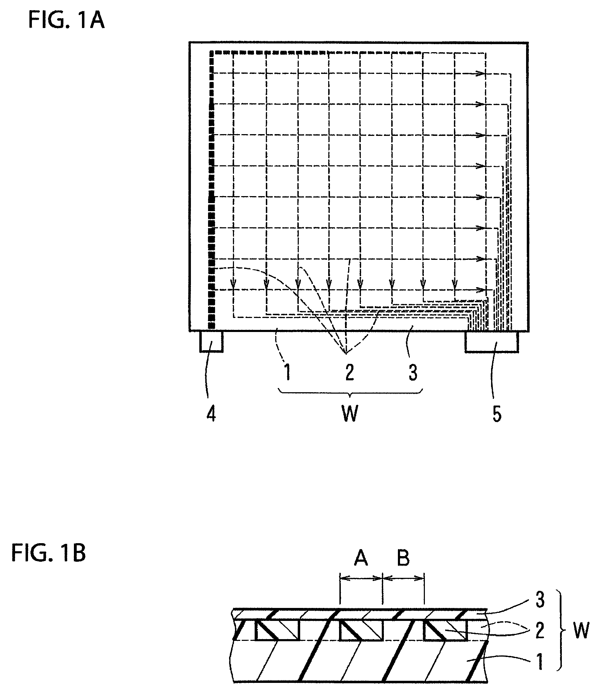

FIG. 1A is a plan view of an input device according to one embodiment of the present invention, and FIG. 1B is a sectional view, on an enlarged scale, of a middle portion of the input device. The input device of this embodiment includes: an optical waveguide W in a rectangular sheet form configured such that linear cores 2 arranged in a lattice form are held between an under cladding layer 1 and an over cladding layer 3 both in a rectangular sheet form; a light-emitting element 4 connected to one end surface of the linear cores 2 arranged in the lattice form; and a light-receiving element 5 connected to the other end surface of the linear cores 2. Light emitted from the light-emitting element 4 passes through the cores 2 and is received by the light-receiving element 5. A surface region of the over cladding layer 3 corresponding to part of the linear cores 2 arranged in the lattice form serves as an input region. In FIG. 1A, the cores 2 are indicated by broken lines, and the thickness of the broken lines indicates the width of the cores 2. Also, in FIG. 1A, the number of cores 2 are shown as abbreviated. Arrows in FIG. 1A indicate the directions in which light travels.

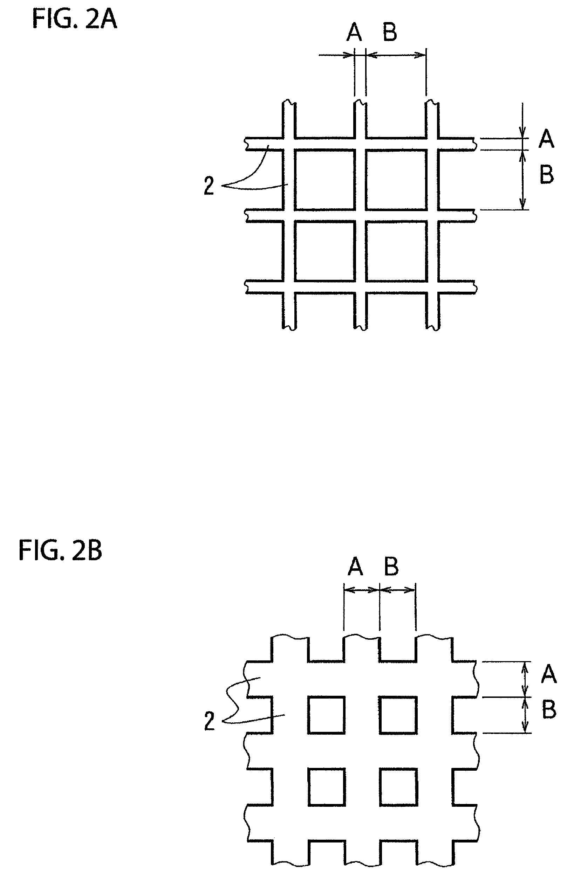

Gaps B between adjacent ones of the linear cores 2 arranged in the lattice form are in the range of 10 to 300 µm, which is smaller than conventional gaps (conventional gaps of at least 450 µm or more). FIG. 2A is a schematic plan view of the conventional linear cores 2 in a lattice form, and FIG. 2B is a schematic plan view of the linear cores 2 in the lattice form of this embodiment. In this embodiment, the linear cores 2 have a width A in the range of 300 to 590 µm which is greater than a conventional width (conventional width of at most 150 µm or less).

In the optical waveguide W, the cores 2 have an elasticity modulus equal to or higher than the elasticity moduli of the under cladding layer 1 and the over cladding layer 3. For example, the cores 2 have an elasticity modulus in the range of 1 to 10 GPa, the over cladding layer 3 has an elasticity modulus in the range of 0.1 to 10 GPa, and the under cladding layer 1 has an elasticity modulus in the range of 0.1 to 1 GPa. The reason why the elasticity modulus of the cores 2 is equal to or higher than those of the under cladding layer 1 and the over cladding layer 3 as described above is as follows. If the elasticity modulus of the cores 2 is lower than those of the under cladding layer 1 and the over cladding layer 3, the surroundings of the cores 2 are hard, so that the cores 2 are less prone to proper deformation when pressed. This makes it difficult to precisely sense a pressed position.

The provision of such small gaps B in the range of 10 to 300 µm between adjacent ones of the linear cores 2 arranged in the lattice form is a significant feature of the present invention. This prevents the tip input part such as a pen tip from sinking deeply in the gaps B, even if the force pressing the input region on the surface of the over cladding layer 3 is increased during the input of a character and the like with the input element such as a pen, and when the tip input part such as a pen tip is very thin. Further, when continuously moved with the increased pressing force, the tip input part (such as a pen tip) of the input element is not caught on the cores 2 because the tip input part does not deeply sink in the gaps B. As a result, no cracking occurs in the cores 2. When the gaps B are too small, it is difficult to form the gaps B. When the gaps B are too large, there is a danger that the tip input part such as a pen tip sinks deeply in the gaps B.

In this embodiment, the optical waveguide W is in a sheet form configured such that the linear cores 2 arranged in the lattice form are buried in a front surface part of the under cladding layer 1 in a sheet form so that the top surface of the cores 2 is flush with the front surface of the under cladding layer 1, and such that the over cladding layer 3 in a sheet form is formed so as to cover the front surface of the under cladding layer 1 and the top surface of the cores 2. The optical waveguide W having such a specific structure achieves the uniform thickness of the over cladding layer 3. In combination with the deformation suppression function because of the aforementioned elasticity modulus setting and the arrangement of the linear cores 2, the optical waveguide W easily detects the position pressed with the tip input part of the input element, and ensures good writing feelings when a user is writing with the use of the input element. For the optical waveguide W having the aforementioned structure, the thicknesses of the respective layers are as follows. For example, the under cladding layer 1 has a thickness in the range of 20 to 2000 µm, and the cores 2 have a thickness in the range of 5 to 100 µm. The over cladding layer 3 has a thickness in the range of 1 to 200 µm, and preferably has a relatively small thickness in the range of 10 to 100 µm, which makes it easy to detect the position pressed with the input element such as a pen.

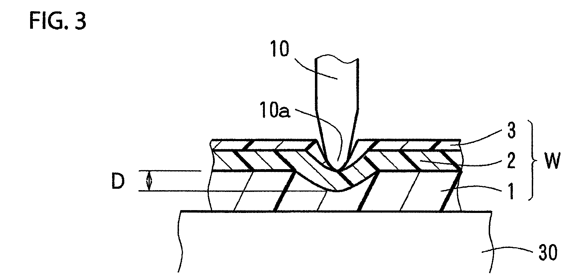

The input device is placed on a flat base 30 such as a table, for example, as shown in sectional view in FIG. 3, and is used in such a manner that information such as a character is written into the input region with an input element 10 such as a pen. By the writing, the surface of the over cladding layer 3 of the optical waveguide W is pressed with a tip input part 10a such as a pen tip. In part of the optical waveguide W which is pressed with the tip input part 10a such as a pen tip, the cores 2 are hence bent along the tip input part 10a such as a pen tip so as to sink in the under cladding layer 1. Light leakage (scattering) from the bent part of the cores 2 occurs. Thus, the level of light received by the light-receiving element 5 is decreased in the cores 2 pressed with the tip input part 10a such as a pen tip. The position (coordinates) of the tip input part 10a such as a pen tip and the movement locus thereof are sensed based on the decrease in the level of received light.

When the aforementioned pressing with the tip input part 10a is released (the input is completed), the under cladding layer 1, the cores 2 and the over cladding layer 3 return to their original states (with reference to FIG. 1B) because of their restoring forces. It is preferable that the sinking depth D of the cores 2 in the under cladding layer 1 is a maximum of 2000 µm. When the sinking depth D exceeds 2000 µm, there are dangers that the under cladding layer 1, the cores 2 and the over cladding layer 3 do not return to their original states and that cracking occurs in the optical waveguide W.

The input device further includes a CPU (central processing unit) (not shown) for controlling the input device. In the CPU is incorporated a program for specifying the position and movement locus of the tip input part 10a such as a pen tip, based on the decrease in the level of light received by the light-receiving element 5. Data representing the position and movement locus of the tip input part 10a, for example, is stored as electronic data in a storage means such as a memory.

Information such as a note stored in the storage means may be reproduced (displayed) using a reproducing terminal (such as a personal computer, a smartphone, and a tablet-type device), and may be further stored in the aforementioned reproducing terminal. In this case, the reproducing terminal and the input device are connected to each other with a connecting cable such as a micro USB cable, for example. The information such as a note is stored in a general-purpose file format such as PDF, for example, in the memory of the storage means.

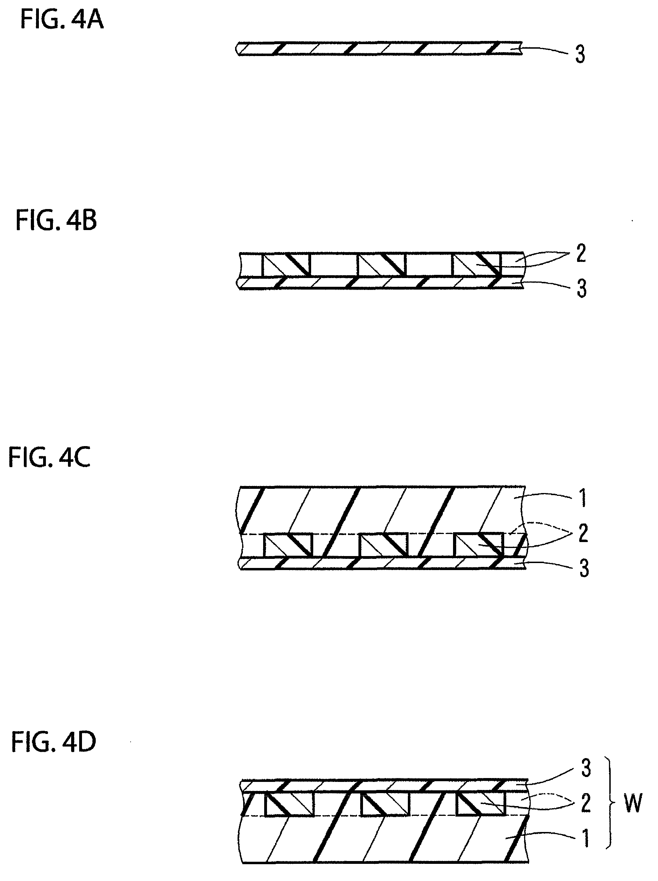

Next, a method of manufacturing the optical waveguide W will be described. Examples of the materials for the formation of the under cladding layer 1, the cores 2, and the over cladding layer 3 which constitute the optical waveguide W include photosensitive resins and thermosetting resins. The optical waveguide W may be produced by a manufacturing method depending on the materials. Specifically, as shown in FIG. 4A, the over cladding layer 3 is initially formed to have a sheet form with a uniform thickness. Next, as shown in FIG. 4B, the cores 2 in a protruding shape are formed in a predetermined pattern on the upper surface of the over cladding layer 3. Next, as shown in FIG. 4C, the under cladding layer 1 is formed on the upper surface of the over cladding layer 3 so as to cover the cores 2. Then, as shown in FIG. 4D, the resultant structure is turned upside down so that the under cladding layer 1 is positioned on the bottom side and the over cladding layer 3 is positioned on the top side. In this manner, the optical waveguide W is provided.

The cores 2 have a refractive index higher than the refractive indices of the under cladding layer 1 and the over cladding layer 3. The adjustment of the elasticity moduli and the refractive indices may be made, for example, by adjusting the selection of the types of the materials for the formation of the cores 2, the under cladding layer 1 and the over cladding layer 3, and the composition ratio thereof.

In the aforementioned embodiment, the width A of the cores 2 is in the range of 300 to 590 µm which is greater than a conventional width. However, the width A of the cores 2 may be outside the aforementioned range when the gaps B between the cores 2 are in the range of 10 to 300 µm.

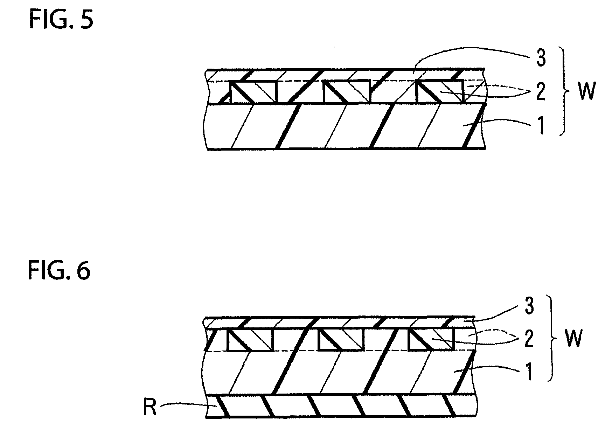

The structure of the optical waveguide W may be other than that of the aforementioned embodiment. For example, as shown in sectional view in FIG. 5, the optical waveguide W may have a structure such that the cores 2 in a protruding shape are formed in a predetermined pattern on the front surface of the under cladding layer 1 in a sheet form with a uniform thickness, and such that the over cladding layer 3 is formed on the front surface of the under cladding layer 1 so as to cover the cores 2.

Also, as shown in sectional view in FIG. 6, an elastic layer R such as a rubber layer may be provided on the back surface of the under cladding layer 1 of the optical waveguide W. Although the elastic layer R is provided on the optical waveguide W shown in sectional view in FIG. 1B, the elastic layer R may be similarly provided on the optical waveguide W shown in sectional view in FIG. 5. In this case, when the restoring forces of the under cladding layer 1, the cores 2 and the over cladding layer 3 are weakened or when the under cladding layer 1, the cores 2 and the over cladding layer 3 are originally made of materials having weak restoring forces, the elastic force of the elastic layer R may be used to assist the weak restoring forces, thereby allowing the under cladding layer 1, the cores 2 and the over cladding layer 3 to return to their original states after the pressing with the tip input part 10a of the input element 10 (with reference to FIG. 3) is released. The elastic layer R has a thickness in the range of 20 to 2000 µm and an elasticity modulus in the range of 0.1 MPa to 1 GPa.

It is only necessary for the input element 10 to be able to press the optical waveguide W in the aforementioned manner. The input element 10 may be, for example, a writing implement capable of writing on a paper sheet with ink and the like or a mere rod or stick which dispenses no ink and the like.

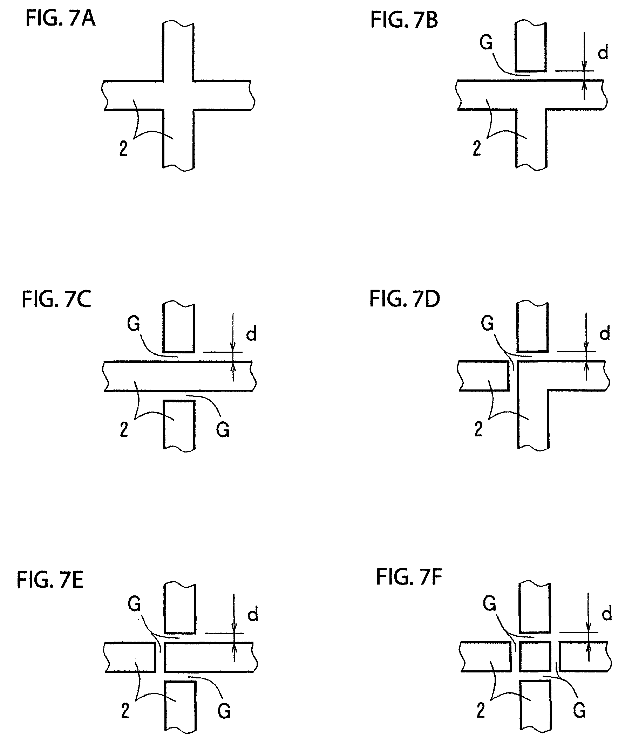

Each intersection of the linear cores 2 arranged in the lattice form is generally configured to be continuous in all of the four intersecting directions as shown in enlarged plan view in FIG. 7A in the aforementioned embodiment, but may be of other configurations. For example, each intersection may be separated by a gap G to become discontinuous only in one of the intersecting directions, as shown in FIG. 7B. The gap G is made of the material for the formation of the under cladding layer 1 or the over cladding layer 3. The gap G has a width d greater than 0 (zero) (it is only necessary that the gap G is formed) and generally not greater than 20 µm. Likewise, as shown in FIGS. 7C and 7D, each intersection may be discontinuous in two intersecting directions (in two opposed directions in FIG. 7C, and in two adjacent directions in FIG. 7D). Alternatively, each intersection may be discontinuous in three intersecting directions, as shown in FIG. 7E. Also, each intersection may be discontinuous in all of the four intersecting directions, as shown in FIG. 7F. Further, the cores 2 may be in a lattice form including two or more types of intersections shown in FIGS. 7A to 7F. The term "lattice form" formed by the linear cores 2 as used in the present invention shall be meant to include a lattice form in which part or all of the intersections are formed in the aforementioned manner.

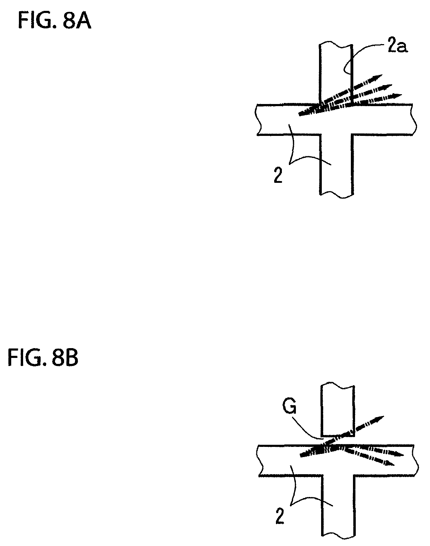

In particular, intersections which are discontinuous in at least one intersecting direction as shown in FIGS. 7B to 7F are capable of reducing intersection losses of light. At an intersection which is continuous in all of the four intersecting directions as shown in FIG. 8A, attention will be given on one intersecting direction (upward direction as seen in FIG. 8A). Then, part of light incident on the intersection reaches a wall surface 2a of a first core 2 perpendicular to a second core 2 through which the light travels, and is transmitted through the first core 2 (with reference to dash-double-dot arrows in FIG. 8A) because of the large angle of reflection from the wall surface. Such light transmission occurs also in the opposite intersecting direction (downward direction as seen in FIG. 8A). As shown in FIG. 8B, on the other hand, when an intersection is made discontinuous by the gap G in one intersecting direction (upward direction as seen in FIG. 8B), an interface between the gap G and a core 2 is formed. Then, part of light transmitted through the core 2 with reference to FIG. 8A is not transmitted through the core 2 but is reflected from the interface to continue traveling through the core 2 (with reference to dash-double-dot arrows in FIG. 8B) because of the smaller angle of reflection at the interface. Based on these facts, the reduction in intersection losses of light is achieved by making the intersection discontinuous in at least one intersecting direction as mentioned above. As a result, the sensitivity for detecting of the pressed position with a pen tip and the like is increased.

Next, inventive examples of the present invention will be described in conjunction with a comparative example. It should be noted that the present invention is not limited to the inventive examples.

### EXAMPLES

### [Material for Formation of Under Cladding Layer and Over Cladding Layer]

Component a: 75 parts by weight of an epoxy resin (YL7410 available from Mitsubishi Chemical Corporation).
Component b: 25 parts by weight of an epoxy resin (JER1007 available from Mitsubishi Chemical Corporation).
Component c: 2 parts by weight of a photo-acid generator (CPI101A available from San-Apro Ltd.).

A material for the formation of an under cladding layer and an over cladding layer was prepared by mixing these components a to c together.

### [Material for Formation of Cores]

Component d: 75 parts by weight of an epoxy resin (EHPE3150 available from Daicel Corporation).
Component e: 25 parts by weight of an epoxy resin (KI-3000-4 available from Tohto Kasei Co., Ltd.).
Component f: 1 part by weight of a photo-acid generator (SP170 available from ADEKA Corporation).
Component g: 50 parts by weight of ethyl lactate (a solvent available from Wako Pure Chemical Industries, Ltd.).

A material for the formation of cores was prepared by mixing these components d to g together.

### [Production of Optical Waveguide]

First, the over cladding layer was formed on a surface of a base material made of glass by a spin coating method with the use of the aforementioned material for the formation of the over cladding layer. The over cladding layer had a thickness of 25 µm and an elasticity modulus of 3 MPa. A viscoelasticity measuring device (RSA3 available from TA instruments Japan Inc.) was used for the measurement of the elasticity moduli.

Next, the linear cores arranged in a lattice form were formed on a surface of the over cladding layer by a photolithographic method with the use of the aforementioned material for the formation of the cores. The cores had a thickness of 50 µm and an elasticity modulus of 2 GPa. The values listed in TABLE 1 below were used for the width of the cores and for gaps between the cores.

Next, the under cladding layer was formed on the upper surface of the over cladding layer by a spin coating method with the use of the aforementioned material for the formation of the under cladding layer so as to cover the cores. The under cladding layer had a thickness of 300 µm and an elasticity modulus of 3 MPa.

Then, the over cladding layer was stripped from the base material made of glass. Next, the under cladding layer was bonded to a surface of an aluminum plate with an adhesive agent. In this manner, an optical waveguide (with reference to FIG. 1B) was produced on the surface of the aluminum plate, with the adhesive agent therebetween.

### [Evaluation of Optical Waveguide]

Characters were written in ten arbitrary locations on the surface of the over cladding layer with a tip (with a tip diameter of 0.5 mm) of a ballpoint pen, with loads applied as listed in TABLE 1 below. The results were listed in TABLE 1 below in which an optical waveguide with no cracks in the over cladding layer, the cores, and the under cladding layer was evaluated as being acceptable and indicated by an open circle, and an optical waveguide with a crack in any one of the over cladding layer, the cores, and the under cladding layer was evaluated as being unacceptable and indicated by a cross.

**[TABLE 1]**

| | | Inventive Examples | | | | | | | Compara tive Example |
|---|---|---|---|---|---|---|---|---|---|
| | | 1 | 2 | 3 | 4 | 5 | 6 | 7 | |
| Width of cores (µm) | | 50 | 100 | 150 | 300 | 450 | 590 | 750 | 150 |
| Gaps between cores (µm) | | 300 | | | | 150 | 10 | | 450 |
| Eval uation | Load: 3 N | ○ | ○ | ○ | ○ | ○ | ○ | ○ | × |
| | Load: 5 N | ○ | ○ | ○ | ○ | ○ | ○ | ○ | × |
| | Load: 8 N | ○ | ○ | ○ | ○ | ○ | ○ | ○ | × |
| | Load: 10 N | ○ | ○ | ○ | ○ | ○ | ○ | ○ | × |

The results of TABLE 1 show that the optical waveguide in each of Inventive Examples 1 to 7 is excellent in resistance to cracking against a large pressing force and that the optical waveguide in the Comparative Example is poor in such resistance to cracking. It is found that such a difference in the results depends on the gaps between the cores.

The optical waveguide shown in sectional view in FIG. 1B was used as the optical waveguide in each of Inventive Examples 1 to 7. However, evaluation results showing tendencies similar to those in Inventive Examples 1 to 7 were also produced when the optical waveguide shown in sectional view in FIG. 5 was used as the optical waveguide in each of Inventive Examples 1 to 7.

Also, evaluation results showing tendencies similar to those in Inventive Examples 1 to 7 were also produced when a rubber layer was provided on the lower surface of the under cladding layer and had a thickness in the range of 20 to 2000 µm and an elasticity modulus in the range of 0.1 MPa to 1 GPa.

Although specific forms in the present invention have been described in the aforementioned examples, the aforementioned examples should be considered as merely illustrative and not restrictive. It is contemplated that various modifications evident to those skilled in the art could be made without departing from the scope of the present invention.

The input device according to the present invention is applicable to preventing cracking from occurring in the optical waveguide to maintain the function of the input device when a pressing force is large during the input of information such as a character with the input element such as a pen.

### REFERENCE SIGNS LIST

- B: Gaps
- W: Optical waveguide
- 1: Under cladding layer
- 2: Cores
- 3: Over cladding layer

## Claims

1. An input device comprising:
an optical waveguide in a sheet form including an under cladding layer in a sheet form, an over cladding layer in a sheet form, and a plurality of linear cores arranged in a lattice form, the cores being held between the under cladding layer and the over cladding layer;
a light-emitting element connected to one end surface of the cores of the optical waveguide; and
a light-receiving element connected to the other end surface of the cores,
wherein light emitted from the light-emitting element passes through the cores of the optical waveguide and is received by the light-receiving element,
wherein a surface region of the over cladding layer corresponding to part of the cores arranged in the lattice form of the optical waveguide serves as an input region,
wherein a position pressed with a tip input part of an input element in the input region is specified, based on the amount of light propagating in the cores which is changed by the pressing with the tip input part,
wherein the cores have an elasticity modulus equal to or higher than those of the under cladding layer and the over cladding layer, and
wherein gaps between adjacent ones of the linear cores arranged in the lattice form are in the range of 10 to 300 µm to prevent the cores from being cracked due to the pressing with the tip input part.

2. The input device according to claim 1, wherein the optical waveguide has a structure such that the cores are buried in a surface part of the under cladding layer so that the top surface of the cores is flush with the surface of the under cladding layer, and such that the over cladding layer is formed so as to cover the surface of the under cladding layer and the top surface of the cores.
